Europäisches Patentamt

European Patent Office

Office européen des brevets

(11) Veröffentlichungsnummer: **0 307 562 B1**

## (12) EUROPÄISCHE PATENTSCHRIFT

(45) Veröffentlichungstag der Patentschrift: **16.12.92**

(21) Anmeldenummer: **88110631.4**

(22) Anmeldetag: **04.07.88**

(51) Int. Cl.⁵: **B29B 7/42**

(54) **Vorrichtung zum Mischen von Isocyanat und Polyol, deren Gemisch zu Polyurethan ausreagiert.**

(30) Priorität: **12.09.87 DE 3730782**

(43) Veröffentlichungstag der Anmeldung:
**22.03.89 Patentblatt 89/12**

(45) Bekanntmachung des Hinweises auf die
Patenterteilung:
**16.12.92 Patentblatt 92/51**

(84) Benannte Vertragsstaaten:
**AT BE CH ES FR GB GR IT LI LU NL SE**

(56) Entgegenhaltungen:
**WO-A-86/02313**

**JAPANESE PATENT GAZETTE, Woche 8707,
Sektion CH, Klasse A, no. 87-045443 [07],
Derwent Publications Ltd, London, GB; & JP-
A-62 001 446 (KYOCERA CORP.) 07-01-1987**

(73) Patentinhaber: **Klöckner Ferromatik Desma
GmbH
Riegeler Strasse 4
W-7831 Malterdingen(DE)**

(72) Erfinder: **Pontius, Klaus Dipl.-Ing.
Schulstrasse 88
W-5508 Hermkeil(DE)**
Erfinder: **Schrammel, Werner Ing.
Rothalde 17
W-783 Emmendigen(DE)**

(74) Vertreter: **Röther, Peter, Dipl.-Phys. et al
Patentabteilung, Klöckner-Werke AG, Klöcknerstrasse 29
W-4100 Duisburg 1(DE)**

EP 0 307 562 B1

## Beschreibung

Die Erfindung betrifft eine Vorrichtung entsprechend dem Oberbegriff des Anspruchs 1.

Zum Herstellen des zu Polyurethan ausreagierenden Gemisches aus Isocyanat und Polyol kommen entweder Mischköpfe oder Vorrichtungen mit einer Schnecke zum Einsatz.

Die Mischköpfe (DB-C-20 65 057, DB-C-20 65 841) weisen im Prinzip eine einseitig offene Bohrung auf, in der ein Stößel geführt ist.

Etwa im mittleren Bereich dieser Bohrung sind in der Wandung einander gegenüber Düsen zum Zuführen von Isocyanat und Polyol angeordnet. Dieser Bereich der Bohrung wird allgemein als Mischkammer bezeichnet. Während des Mischens von Isocyanat und Polyol befindet sich der Stößel oberhalb dieser Düsen.

Nach Beendigen des Mischens wird das zu Polyurethan ausreagierende Gemisch durch das axiale Verschieben des Stößels in die an den Mischkopf sich anschließende Form zum Herstellen der Formkörper gefördert.

Vorrichtungen der eingangs erwähnten Art (DB-C-20 62 008) kommen insbesondere beim Herstellen und Anformen von Schuhsohlen aus Polyurethan an Schuhschäfte zum Einsatz, wobei die Schuhsohlen aus zu dem Polyurethan ausreagierendem Gemisch hergestellt werden. Zunächst wird eine abriebfeste Laufsohle aus Polyurethan geformt und diese mit dem Schaft über eine Zwischensohle aus Polyurethan verbunden (DB-C-22 41 493).

Diese Schuhbesohlungsmaschinen weisen einen Rundtisch auf, der taktweise verdreht wird. Der Rundtisch weist auf seinem Umfang in gleichen Abständen jeweils einen Leisten und einen Gegenstempel auf, die als Baueinheit höhenverstellbar und um eine horizontale, in radialer Richtung zeigende Achse verschwenkbar sind.

Der feststehende Teil der Schuhbesohlungsmaschine weist an zwei Arbeitsstationen zwei Seitenformteile und einen Bodenstempel auf, die in der ersten Arbeitsstation mit einem Gegenstempel zum Formen der Laufsohle und in der zweiten Arbeitsstation mit der geformten Laufsohle und einem aufgeleisteten Schaft zum Herstellen der Zwischensohle zusammenarbeiten.

Die Seitenformteile begrenzen in ihrer Schließstellung zwei Angußbohrungen.

Über die untere Angußbohrung wird in der ersten Arbeitsstation das zu der Laufsohle aus Polyurethan ausreagierende Gemisch zugeführt, wobei der obere Angußkanal durch den Gegenstempel verschlossen ist, während in der zweiten Arbeitsstation der untere Angußkanal durch den Bodenstempel verschlossen ist und über den oberen Angußkanal das zu der Zwischensohle aus Polyurethan ausreagierende Gemisch zugeführt wird.

Beide Arbeitsstationen weisen Vorrichtungen mit einem Zylinder und einer Schnecke zum Mischen von Isocyanat und Polyol auf.

Das Isocyanat und Polyol werden jeweils über Ventile und Düsenbohrungen dem Zylinderraum zugeführt. In der Offenstellung der Sitzventile steht das Mundstück des Zylinders gegen die Mündung der zugeordneten Angußbohrung der in Schließstellung befindlichen Seitenformteile an. Eine dosierte Menge des Gemisches aus Isocyanat und aus Polyol werden jeweils dem Zylinder zugeführt, von der Schnecke gemischt und über den Angußkanal in den betreffenden Hohlraum zur Bildung der Laufsohle bzw. Zwischensohle gefördert.

Anschließend werden die Sitzventile in ihre Sperrstellung gebracht und die Vorrichtungen außer Eingriff mit der betreffenden Form gebracht.

Während in der einen Arbeitsstation der fertige Schuh entleistet, ein neuer Schuhschaft aufgeleistet und mit den Seitenformteilen und dem Bodenstempel, der eine bereits geformte Laufsohle aufweist, in Eingriff gebracht wird, werden in der anderen Arbeitsstation der Gegenstempel, die Seitenformteile und der Bodenstempel zum Formen einer Laufsohle in Eingriff gebracht.

Während der Zeit, in der die Vorrichtung außer Eingriff mit den Arbeitsstationen ist, schleudert die Schnecke auf ihren Stegen befindliches restliches Gemisch auf die Innenwandung des Zylinders, im Idealfall vollständig, wobei jedoch tatsächlich eine sehr geringe Restmenge auf den und zwischen den Schneckenstegen verbleibt. Das auf der Innenwandung des Zylinders geschleuderte Gemisch bildet einen Film, der in den aufeinanderfolgenden Takten zum Herstellen der weiteren Laufsohlen und Zwischensohlen anwächst, und zwar so lange, bis seine Dicke maximal der Spaltweite zwischen der Innenwandung des Mischzylinders und der Schnecke entspricht.

Im allgemeinen ist es üblich, die Schnecke und den Mischzylinder mit einer Lösung, die das zu Polyurethan ausreagierte Gemisch löst, zu reinigen. Es ergeben sich jedoch insoweit schwerwiegende Nachteile, da stets, wenn auch nur geringfügige, Restmengen des Lösungsmittels in der Vorrichtung verbleiben, die dann mit Isocyanat und Polyol in den darauf folgenden Mischtakten vermischt werden und nachteilig die Qualität der hergestellten Laufsohle bzw. Zwischensohle beeinflussen können.

Diese Nachteile werden mit der eingangs erwähnten Vorrichtung vermieden (DE-C-20 62 008). Sobald der auf der Innenwandung des Mischzylinders sich bildende Film aus ausreagiertem Polyurethan die Spaltbreite praktisch auf Null verringert hat, wird durch ein axiales Verschieben der Schnecke auf der Innenwandung des Zylinders der Polyurethanfilm durch die Schneckenstege abgetragen und ins Freie ausgetragen, und zwar während der Zeit, in der die Vorrichtung außer Eingriff mit den Arbeitsstationen steht. Dieses mechanische Beseitigen des Polyurethanfilms auf der Innenwandung des Zylinders erfolgt in erheblich größeren Zeitabständen als das Entfernen mittels eines Lösungsmittels.

Es läßt sich jedoch nicht vermeiden, daß stets geringe Mengen an zu Polyurethan ausreagierenden Gemisch -gering im Vergleich zu den auf die Innenwandung des Mischzylinders gelangenden Mengen - auf den Schneckenstegen verbleibt, so daß es trotzdem, wenn auch in größeren Zeitintervallen, von Zeit zu Zeit erforderlich ist, entweder mit einem Lösungsmittel die Schnecke in der Vorrichtung zu reinigen oder, um die oben dargelegten Nachteile durch die verbleibenden Restmengen an Lösungsmitteln zu vermeiden, die Schnecke auszubauen und sorgfältig nicht nur von den ausreagierten Polyurethan zu reinigen, sondern auch von den Restmengen an Lösungsmittel und anschließend die Schnecke wieder einzubauen.

Bei den kurzen Taktzeiten und dem hohen Ausstoß der heutigen Schuhbesohlungsmaschinen machen sich auch diese erforderlichen Reinigungsarbeiten als Betriebsunterbrechungen störend bemerkbar und reduzieren erheblich den Ausstoß an Schuhen.

Es zeigte sich überraschend, daß auf der polierten Oberfläche von Zirkonoxid-Keramikwerkstoff ein zu Polyurethan ausreagiertes Gemisch aus Isocyanat und Polyol nicht fest zu haften vermag und sich leicht ablösen läßt.

Ausgehend von diesem überraschenden Effekt liegt der Erfindung die Aufgabe zugrunde, die Vorrichtung der eingangs erwähnten Art derart auszubilden, daß sich ohne weiteres ein auf der Innenwandung des Zylinders gebildeter Film aus ausreagiertem Polyurethan leicht lösen läßt, d.h. insbesondere der metallische Kontakt der Schnecke mit der Innenwandung des Zylinders vermeiden läßt.

Diese Aufgabe wird erfindungsgemäß dadurch gelöst, daß die Innenwandung des Zylinders eine Beschichtung aus Zirkonoxid-Keramikwerkstoff aufweist und die Beschichtung eine polierte Oberfläche hat.

Durch diese Maßnahmen wird erreicht, daß die Schnecke dem gebildeten Film aus Polyurethan von der Innenwandung des Zylinders abstreift, ohne daß sie in direktem Kontakt auf der Innenwandung gleitet.

Durch diese Maßnahmen entfällt weiterhin der bisherige hohe Verschleiß aufgrund der metallischen Berührung. Weiterhin wird auch der metallische Abrieb vermieden, der beim weiteren Mischen dem Gemisch beigemischt wird.

In einer noch weiteren Ausgestaltung der Erfindung weist die Schnecke eine Beschichtung aus Zirkonoxid-Keramikwerkstoff auf, wobei die Beschichtung eine polierte Oberfläche hat.

Durch diese Maßnahmen wird erreicht, daß sich praktisch kein Polyurethan auf den Stegen der mit hohen Umdrehungszahlen umlaufenden Schnecke mehr festsetzen kann.

Ein wesentlicher Vorteil der erfindungsgemäßen Maßnahmen besteht darin, daß Lösungsmittel nicht mehr benötigt werden.

Der zum Einsatz kommende Zirkonoxid-Keramikwerkstoff ist z.B. unter dem Handelsnamen SPK (Prospekt " SPK Oxydkeramik" der Fa. Feldmühle) erhältlich.

Die Erfindung ist in der Zeichnung anhand eines Ausführungsbeispiels erläutert:

Fig. 1    zeigt schematisch einen Schnitt durch ein Ausführungsbeispiel der Vorrichtung,

Fig. 2    einen Ausschnitt aus Figur 1.

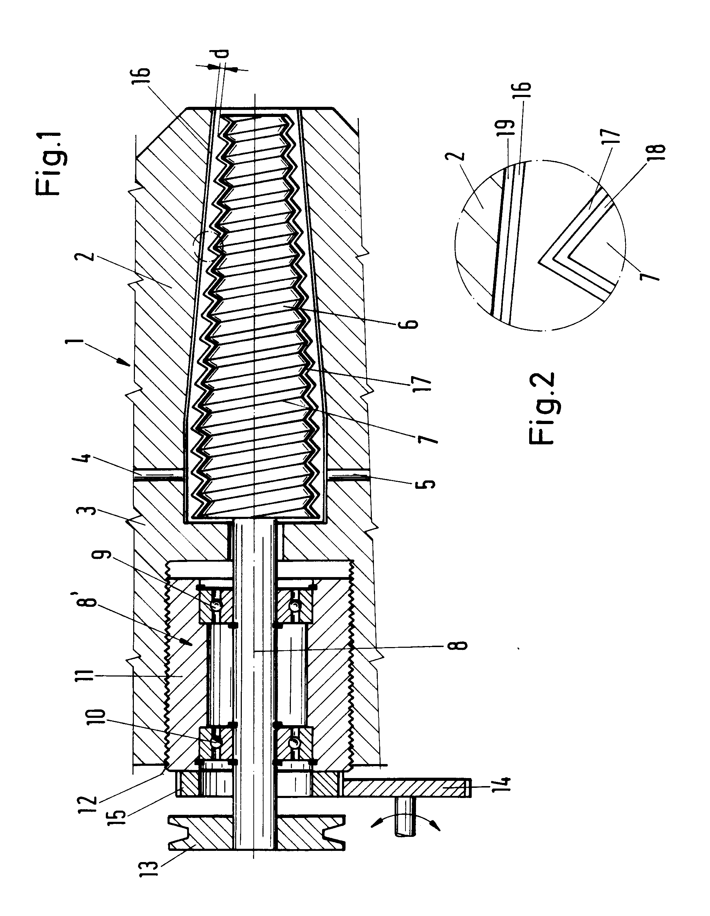

In Figur 1 ist mit 1 der Zylinder bezeichnet, der im Mündungsbereich einen konischen Abschnitt 2 und auf der vom Mündungsbereich entlegenen Seite des konischen Abschnittes einen zylindrischen Abschnitt 3 mit den Bohrungen 4 und 5 aufweist, über die über nicht eingezeichnete Düsen das Isocyanat bzw. Polyol zugeführt wird. Die Schnecke weist ebenfalls im Mündungsbereich einen konischen Abschnitt 6 auf, an den sich ebenfalls auf der vom Mündungsbereich abgelegenen Seite ein zylindrischer Abschnitt 7 und daran die Achse 8 der Schnecke anschließt, die in der Führung 8' frei drehbar gelagert und mit ihr axial verschiebbar ist. Zu diesem Zwecke ist die Achse 8 der Schnecke in den beiden Lagern 9 und 10 gelagert. Diese sind im Zylinderabschnitt 11 angeordnet, der ein Außengewinde 11 aufweist. Dieses steht mit dem Innengewinde 12 des Zylinderabschnitts in Eingriff. Über das Antriebsrad 13 wird die Schnecke in Rotation versetzt, während das Abtriebsritzel 14 eines nicht dargestellten Antriebs mit dem Ritzel 15 der Schnecke kämmt, das mit dem Zylinderabschnitt 11 verbunden ist, und die axiale Verschiebung der Schnecke vornimmt.

Die Innenwandung des Zylinders weist eine Beschichtung 16 aus Zirkonoxid auf, die Schnecke bzw. die Schneckenstege ebenfalls eine mit 17 bezeichnete Beschichtung aus Zirkonoxid. Statt Zirkonoxid kann auch Siliziumnitrid verwendet werden.

Die Figur 2 zeigt einen Ausschnitt aus Figur 1. Gleiche Teile sind mit gleichen Bezugszeichen bezeichnet. Bei der Beschichtung wird zunächst auf die Innenwandung des Zylinders 2 und auf die Schnecke 7 eine Zwischenschicht 19 bzw. 18 aus einer Metallegierung aufgetragen. Anschließend wird bei 10 000 °C bis 20 000 °C aufgeschmolzenes Keramikpulver auf die Zwischenschicht aufgeschossen und die gebildete Beschichtung glatt poliert.

**Patentansprüche**

1. Vorrichtung zum Mischen von zu Polyurethan ausreagierenden Gemischen aus Isocyanat und Polyol, insbesondere zum Herstellen von Schuhsohlen, mit einer drehbaren Schnecke, die mit einem sie mit Abstand umgebenden Gehäuse eine ringförmige Mischkammer bildet, wobei Schnecke und Gehäuse in Förderrichtung des Gemisches jeweils einen zylindrischen Abschnitt und einen sich daran anschließenden konisch verjüngenden Abschnitt aufweisen, und die Schnecke zum Verändern ihres Abstandes zum Gehäuse axial verschiebbar ist,
dadurch gekennzeichnet,
daß die Innenwandung des Gehäuses eine Beschichtung aus Zirkonoxid-Keramikwerkstoff aufweist und die Beschichtung eine polierte Oberfläche hat.

2. Vorrichtung nach Anspruch 1,
dadurch gekennzeichnet,
daß die Schnecke eine Beschichtung aus Zirkonoxid-Keramikwerkstoff aufweist und die Beschichtung eine polierte Oberfläche hat.

**Claims**

1. Device for mixing mixtures of isocyanate and polyol which react to give polyurethane, in particular for producing shoe soles, having a rotatable screw which forms, with a housing surrounding it at a spacing, an annular mixing chamber, the screw and the housing each having, as seen in the direction of conveying the mixture, a cylindrical section and a conically tapering section adjoining the latter, and the screw being axially displaceable to alter its spacing from the housing, characterized in that the inner wall of the housing has a coating of zirconium oxide ceramic material, and the coating has a polished surface.

2. Device according to Claim 1, characterized in that the screw has a coating of zirconium oxide ceramic material, and the coating has a polished surface.

**Revendications**

1. Dispositif pour mélanger des mélanges d'isocyanate et de polyol réagissant en polyuréthanne, notamment pour la fabrication de semelles de chaussures, avec une vis sans fin rotative qui forme une chambre mélangeuse annulaire avec un boîtier qui l'entoure à distance, la vis sans fin et le boîtier présentant respectivement, dans la direction de transport du mélange, une partie cylindrique à laquelle se raccorde une partie se rétrécissant coniquement, et la vis sans fin pouvant être déplacée axialement afin de modifier sa distance du boîtier,
**caractérisé** en ce que la paroi intérieure du boîtier présente un revêtement en matériau céramique à l'oxyde de zirconium, et la surface du revêtement est polie.

2. Dispositif selon la revendication 1, **caractérisé** en ce que la vis sans fin présente un revêtement en matériau céramique à l'oxyde de zirconium, et la surface du revêtement est polie.

Fig.1

Fig.2